# EUROPÄISCHE PATENTSCHRIFT

(11) **EP 0 530 672 B1**
(45) Veröffentlichungstag und Bekanntmachung des Hinweises auf die Patenterteilung: **11.12.1996**
(21) Anmeldenummer: 92114599.1
(22) Anmeldetag: 27.08.1992
(51) Int. Cl.: B01D 24/22, C02F 3/28

(54) **Auswaschbarer Filter**
Washable filter
Filtre lavable

(30) Priorität: 30.08.1991 DE 4128843
(43) Veröffentlichungstag der Anmeldung: 10.03.1993
(73) Patentinhaber: Lange, Lutz, D-40885 Ratingen (DE)
(72) Erfinder: Lange, Lutz, D-40885 Ratingen (DE)
(74) Vertreter: Fitzner, Ulrich, Dr.

(56) Entgegenhaltungen:
- EP-A- 0 227 081
- EP-A- 0 302 545
- EP-A- 0 355 022
- FR-A- 555 145
- US-A- 1 362 125

## Beschreibung

Die vorliegende Erfindung betrifft einen neuartigen auswaschbaren Filter zur Reinigung von Wasser.

Für die Wasserfiltration benutzt man nach dem Stand der Technik heute meist Filter, bei denen das Trübwasser in absteigender oder aufsteigender Richtung durch eine mit Filtermaterial gefüllte Filtrationszone geleitet wird. Als Filtermaterial werden hierbei vorzugsweise Sand. Kies oder auch Aktivkohle verwendet. Die periodische Reinigung solcher Filter erfolgt in der Regel durch sogenannte Rückspülung. D.h., es wird Spülflüssigkeit im Gegenstrom zur Filtrationsrichtung durch das Filtermaterial geschickt, um dieses von Schlamm zu befreien.

Beispiele für solche Anlagen sind in der US 3 886 071. US 4 246 119, US 311 487, US 3 239 061, DE-AS 1033 184, DE-AS 11 83 050, DE 3245 093 und DE-OS 19 62 881 beschrieben. Bei allen diesen Anlagen handelt es sich um Filter, bei denen während der Filtration das zu reinigende Wasser durch eine Filterschicht von oben nach unten geschickt wird. Zum Reinigen der Filterschicht wird wiederum Spülflüssigkeit in umgekehrter Richtung, d.h. von unten nach oben durch die Filterschicht geschickt.

Derartige Anlagen weisen erhebliche Nachteile auf. Denn der sich in einem unterhalb der Filtrationsschicht angeordneten Sedimentationsbecken sammelnde Schlamm läßt sich mit dieser Methode nur schwer entfernen. Dieser muß nämlich zunächst durch das gesamte Filterbett hindurch gedrückt werden. D.h., es muß mit erheblichem Druck und/oder Zeitaufwand beim Reinigen gearbeitet werden. Zudem kann während des Entschlammungsprozesses die Filtration nicht weiterlaufen.

Darüber hinaus eignen sich solche Rückspülfilter nicht für die Anlage mehrerer Filterschichten mit verschiedenen Körnungen. Denn das feine Korn wird während des Rückspülvorgangs nach oben getragen, während das grobe Korn fortschreitend in die unteren Schichten abwandert. Nach einigen Spülungen enthält das Filterbett oben eine Deckschicht, die aus sehr feinem Korn besteht und welche sich bei der anschließenden Filtration rasch verstopft . Die ganze übrige, unter der Feinkornschicht liegende Filtrationsschicht kommt dann praktisch kaum zur Wirkung.

Ein weiterer Nachteil der Gegenstromspülung ist, daß die Anordnung der Mikroorganismenflora innerhalb der Filterschicht weitgehend zerstört wird. Während des Filtrationsvorganges bildet sich nämlich in Abhängigkeit der unter dem Einfluß der Mikroorganismen sich ändernden Schmutzstoffzusammensetzung des Wassers ein Rasen aus Mikroorganismen unterschiedlicher Zusammensetzung. Die Folge ist, daß mit fortschreitender Filtrationsstrecke sich die Mikroorganismenpopulation ändert und so nach und nach die verschiedenen Schmutzstoffraktionen aus dem Wasser entfernt werden. Erheblichen Einfluß übt in diesem Zusammenhang auch der sich ausbildende Sauerstoffgradient aus. Denn in den oberen Teilen, wo das frische Rohwasser zufließt, findet eine starke Sauerstoffanreicherung statt, während der Sauerstoffgehalt in den unteren Schichten geringer ist. In diesen Schichten siedeln sich daher bevorzugt mikroaerophile Mikroorganismen an. Durch die Gegenstromspülung wird nun diese Mikroorganismenflora in ihrer Ordnung zerstört. Die Folge ist, daß mit Beginn der neuen Filtrationsphase eine gewisse Anlaufzeit vergeht, bis die Mikroorganismen ihre Ordnung wiedergefunden haben.

Aus der US 3 534 855, DE-OS 15 36 867 und der DE-OS 28 48 660 sind nun Verfahren bekannt, bei welchen die zu reinigende Flüssigkeit von unten nach oben durch die Filter gedrückt wird, während das Spülen von oben nach unten erfolgt. Diese Verfahren haben zwar den Vorteil, daß etwaig im Sedimentationsraum unterhalb der Filtrationsschicht sich ansiedelnder Schlamm durch den unten angeordneten Ablauf abgezogen wird. Doch bleiben die weiteren bereits oben erwähnten Nachteile des Gegenstromverfahrens weitgehend bestehen. Hinzu kommt, daß der unten liegende Abfluß sich nicht für solche Filteranlagen eignet, welche im Erdreich versenkt werden sollen, wie dies etwa bei Teichfiltern der Fall ist. Denn die Verlegung von Rohren innerhalb des Erdreiches fordert wieder zusätzlichen Konstruktions- und Wartungsaufwand. Auf der anderen Seite ist ein direktes Ableiten des belebten Schlamms m das Erdreich nicht empfehlenswert. Denn diese Methode würde schnell zu einer Vergiftung und Verstopfung des die Filter umgebenden Erdreichs führen.

Aus der DE-PS 13 55 550 ist schließlich eine Vorrichtung zur Filtration von Wasser bekannt, bei welcher zum Auswaschen Wasser in Filtrationsrichtung auf das Filtermaterial aufgetragen wird. Hierzu wird eine Wasserzufuhrleitung oberhalb der Filtrationsschicht angeordnet. Am Ende dieser Leitung befinden sich drehbare Sprüharme. Während des Auswaschvorganges wird nun Wasser von diesen Sprüharmen auf die Filtrationsschicht aufgebracht. Die Sprüharme werden hierbei ständig gedreht und gleichzeitig langsam in das Filtermaterial hineingebohrt.

Dieses Filtersystem weist zwar beim Auswaschen nicht die obengenannten Nachteile auf. Doch funktioniert das langsame Hineindrehen der Sprüharme nur, wenn Filtersand verwendet wird. Aber selbst dann besteht die Gefahr, daß sich die Düsen der Sprüharme allmählich zusetzen. Sofern andere Materialien verwendet werden, beispielsweise grobkörniger Kies, können die Sprüharme nur schwer bewegt werden.Zudem sind sie der Gefahr der Beschädigungen ausgesetzt. Bei empfindlichen Filtermaterialien, etwa porösem Ton besteht außerdem die Gefahr, daß diese Materialien verstopft werden und die gewünschte Filtrationswirkung verloren geht. Ferner erfordert das Anlegen einer derartigen drehbaren Vorrichtung einigen konstruktiven Aufwand. Hinzu kommt der für das Drehen erforderliche Energieaufwand.

Schließlich kommt es auch bei diesem System zu einer Zerstörung der Anordnung der Mikroorganismenflora. Durch das ständige Hineindrehen der Sprüharme in die Filtrationsschicht wird diese nämlich ständig durchgerührt. Auch hier ist für den Beginn eines jeden Filtrationszyklusses daher eine gewisse Anlaufzeit erforderlich, bis sich die Mikroorganismenpopulation wieder geordnet hat.

In der DE-OS 3214419 ist eine Anlage beschrieben, welche aus einem geschlossenen, mit Filtervorrichtungen ausgerüsteten Gefäß besteht. Das Rohwasser wird über eine im oberen Bereich angeordnete Zuleitung 1 zunächst in einen Filtervorraum 2 gegeben. Dieser Filtervorraum umgibt das Filterbett 7, das durch eine perforierte Schicht von dem Raum 2 abgetrennt ist. Aus dem Bild 1 wird deutlich, daß das Wasser aus der Filtervorkammer 2 seitlich in die Filterschicht 7 einströmt. Abgeführt wird das filtrierte Wasser über die unten angeordnete Leitung 8. In dem unteren Teil des Filtervorraums 2 sind zusätzlich Belüftungsvorrichtungen 4 vorgesehen, welche für eine fortgehende Vermischung des in dem Raum befindlichen Wassers sorgten.

Aufgrund der Konstruktionsweise dieser Anlage ergeben sich erhebliche Nachteile. So ist die Filtrationsleistung bzw. das Filtrationsergebnis sehr ungleichmäßig, denn die Filtrationszeit in der Schicht 7 hängt von dem Eintrittsort durch die perforierte Schicht 5 ab. Die im unteren Teil eintretenden Wassermassen haben einen erheblich kürzeren Weg zur Ableitung 8 zurückzulegen als die im oberen Teil eintretenden Wassermassen.

Zudem ist eine Sedimentation des Schlammes vor dem Eintritt in die Filterschicht 7 durch die ständige Verwirbelung mittels der Luftdüsen 4 nicht in ausreichendem Maße möglich. Die Folge ist, daß große Teile der Schlammpartikel aus dem Vorfilter direkt in die Filterschicht gelangen und so zu einer Verkürzung der Standzeiten beitragen.

Schließlich bleibt zu bemerken, daß der Schlammabzug 9 im unteren Teil der Anlage angeordnet ist. Gleiches gilt für die Abführleitung 8 und die Zufuhrleitung für das Rückspülwasser 10. Aus diesem Grunde läßt sich die Anlage nicht im Erdreich versenken. Zudem kann mit den unten liegenden Rückspülleitungen 10 nur eine Reinigung der Filterschicht 7 im Gegenstrom zur Filtrationsrichtung erreicht werden. Das bedeutet wiederum, daß während des laufenden Betriebes eine Reinigung der Anlage nicht möglich ist.

Die DE-OS 3124556 betrifft einen speziellen Filter zum Reinigen von mit Leichtflüssigkeiten verunreinigtem Abwasser. Im Prinzip handelt es sich hierbei um einen Abscheider, der lediglich mit einer Filtermasse gefüllt ist. Hierbei spielen sich die Vorgänge der Schwerkraftabtrennung und der Speicherung der abgeschiedenen Leichtflüssigkeit einerseits und der Koaleszenzfilterung andererseits im gleichen Behälter ab.

Hierbei handelt es sich also nicht um ein aus zwei Filterkammern bestehendes Gefäß. Vielmehr wird die zu reinigende Flüssigkeit über die unten liegende Zufuhrleitung 2 und die Steigeleitung 5 einer Filterschicht zugeleitet, welche von oben nach unten durchströmt wird. Von der unten liegenden Kammer 11 gelangt sodann das Wasser in eine spezielle Ablaufkammer 14.

Mit dieser Anlage wird demgemäß der Effekt, eine Filterung mit zwischengeschalteter Sedimentation durchzuführen, nicht erreicht. Es ist vielmehr Zweck der Anlage, an der Oberfläche 24 im oberen Teil der Vorrichtung Leichtflüssigkeit zu sammeln. Bei fortgesetztem Betrieb der Vorrichtung sammelt sich eine immer stärker werdende Leichtflüssigkeitsschicht 24 an der Oberfläche an, die sich in die Filterfüllung 4 hineinerstreckt. Die Folge ist, daß Leichtflüssigkeit in die Kammer 14 gelangt. In diesem Augenblick sorgt hier jedoch der Schwimmer 21 für einen Verschluß des Abflusses.

Die nunmehr erforderliche Reinigung der Anlage wird mittels der unten liegenden Rückspülrohre 12 bewirkt; d.h. auch diese Anlage ist darauf ausgerichtet, eine Reinigung im Gegenstrom durchzuführen. Ein Hinweis darauf, daß mit diesem System eine biologische Reinigungsanlage betrieben werden kann und dabei durch Reinigung im Gleichstrom während des laufenden Betriebes zu erreichen ist, kann somit der DE-OS 3124556 nicht entnommen werden. Abgesehen davon kann auch diese Anlage nicht im Erdreich versenkt werden, da das Zuflußrohr 2 und die Rückspülrohre 12 im unteren Bereich angeordnet sind.

Das deutsche Gebrauchsmuster 7816518 betrifft schließlich eine lediglich aus einer Filterkammer bestehenden Tropfkörperanlage. Hier wird das von unten über die Leitung 3 zugeführte Wasser mittels der Düsen 7 auf der Oberfläche einer Filterschicht verteilt. Das Wasser durchströmt von oben nach unten die Filterschicht 9 und wird schließlich über die Leitung 12 der Anlage wieder entnommen.

Auch dieser Anlage ist somit das Prinzip einer Reinigung mittels Filterschicht mit dazwischengeschalteter Sedimentation nicht zu entnehmen. Auf Seite 2 in Absatz 1 werden vielmehr Überlegungen angestellt, wie sich das Entfernen der Filtermasse erleichtern läßt. Das bedeutet: diese Schrift geht davon aus, daß während des laufenden Betriebes eine Reinigung nicht möglich ist.

Die vorliegende Erfindung hat sich nunmehr die Aufgabe gestellt, einen auswaschbaren Filter zur Reinigung von Wasser, bestehend aus einem aufrechtstehenden Gefäß mit einem Zulauf für das Rohwasser in seinem oberen Bereich, unterhalb dessen sich eine aus zwei Filterkammern bestehende Filtrationszone mit einem darunter angeordneten Sedimentationsraum befindet, wobei die erste Kammer unterhalb des Zulaufs angeordnet ist, zur Verfügung zu stellen, welche die vorgenannten Nachteile nicht aufweist.

Diese Aufgabe wird dadurch gelöst, daß a) das Gefäß oben offen ist, b) die Filtrationszone duch eine vertikale, oberhalb des Sedimentationsraumes angeordnete Wand in die zwei Filterkammern derart geteilt ist, daß diese nur über den Sedimentationsraum miteinander verbunden sind, c) der Ablauf für das filtrierte Wasser oberhalb der zweiten Kammer angelegt ist, d) in dem Sedimentationsraum eine Schwergutpumpe mit einer Schlammabfuhrleitung sich befindet, e) die Schlammabfuhrleitung von der Schwergutpumpe zum oberen Rand des Gefäßes und von dort nach außen geführt ist, und f) oberhalb der ersten Kammer eine oder mehrere Leitungen für die Zufuhr des Spülwassers angeordnet ist (sind).

Erfindungsgemäß ist der Sedimentationsraum von den beiden Filterkammern vorzugsweise durch eine gelochte Platte getrennt. Hierbei wird diese Platte zusätzlich durch Stützen gegen Durchbiegen abgesichert. Der Boden des Sedimentationsraums kann aus beliebigem Material bestehen. Dies muß nur stabil genug sein, um dem Druck der Stützen mit den darüber liegenden Filtrationsschichten standzuhalten. Im einfachsten Falle kann beispielsweise Beton verwendet werden.

Als Filtersubstrat werden erfindungsgemäß die handelsüblichen Substrate verwendet. Im einfachsten Falle kann dies Kies sein. Ebenso können auch Schichten mit unterschiedlichen Substraten oder Körnungen verwendet werden. Beispielsweise läßt sich eine Schicht mit feinem Kies und eine Schicht mit grobem Kies anwenden.

Gewünschtenfalls können diese verschiedenen Schichten durch Unterteilungssegmente, beispielsweise gelochte Platten oder Filtermatten voneinander getrennt sein. Im Bereich des Wasserzulaufs kann zudem noch zusätzlich ein Filternetz angeordnet werden.

Zum Spülen der Filtrationsvorrichtung werden oberhalb der Filtrationsschichten Leitungen angeordnet, aus welchen unter hohem Druck Wasser auf die Filtrationszone aufgesprüht wird. Im einfachsten Falle, beispielsweise bei der Anlage von Gartenteichfiltern, kann dies auch mittels eines gewöhnlichen Gartenschlauchs bewerkstelligt werden. Durch dieses Aufsprühen von Spülwasser wird der Schlamm in den unteren Sedimentationsraum gedrückt, von wo er mittels einer Sedimentations pumpe außerhalb des Filtrationsgefäßes verbracht wird.

Zu diesem Zweck ist die Sedimentationspumpe über einen Ablaufschacht mit der Oberseite der Filteranlage verbunden. In dem Ablaufschacht ist eine Leitung für den Abtransport des Sedimentationsgutes angeordnet.

Der Vorteil der erfindungsgemäßen Anlage ist darin zu sehen, daß eine optimale Befreiung des Filtermaterials vom Schlamm in Abständen gewährleistet ist, ohne daß es zu einer Zerstörung der Anordnung der Bakterienflora kommt. Denn im Gegensatz zum bisherigen Stand der Technik wird mit Gleichstrom gearbeitet. Auch eine durch Rühren zusätzliche Zerstörung der Filtrationsschicht findet nicht statt, so daß eine Beschädigung des Filtrationssubstrates und der Bakterienflora hierdurch nicht stattfindet. Durch die Verwendung der Schwergutpumpe im Sedimentationsraum wird zudem der Abtransport des Schlammes gegenüber dem bisherigen Stand der Technik noch beschleunigt.

Die Anlage der Schwergutpumpe hat zudem den weiteren Vorteil, daß sich der während des Filtrationsvorgangs ansammelnde Schlamm aus dem Sedimentationsraum entfernen läßt, ohne den Filtrationsprozeß unbedingt unterbrechen zu müssen. Schließlich sind alle Zu- und Ableitungen für Rohwasser, Filtrat und Schlamm an dem oberen Rand des Gefäßes angeordnet. D.h., die Anlage eignet sich für ein Versenken in das Erdreich, weil im unteren Bereich der Gefäßwand keine Rohranschlüsse vorliegen. Damit kann die Anlage jederzeit optisch in die Landschaft integriert werden. Insbesondere bei Teichfiltern kann dies erhebliche Vorteile gegenüber dem bisher üblichen, geschlossenen Systemen haben.

Die optische Integration in die Landschaft kann noch dadurch gesteigert werden, daß in die obere Filtersubstratschicht Pflanzen eingesetzt werden. Diese bewirken zudem noch eine zusätzliche Filtration nach dem Muster der bekannten Wurzelraumkläranlage.

Weiterer Vorteil der erfindungsgemäßen Anlage ist die Verwendung sehr einfacher Bauteile sowie deren einfache Handhabung. So lassen sich für den Behälter beliebige Materialien z.B. Kunststoffe verwenden. Ebenso kann bei größeren Anlagen auch Beton verwendet werden. Auch für die Pumpe können handelsübliche, preiswerte Waren verwendet werden. Schließlich gewährleistet, die Möglichkeit, im einfachsten Falle mittels des Gartenschlauches das Auswaschen der Filterschicht auswaschen zu können, sogar die Anwendbarkeit für den Hobbygärtner.

Im folgenden wird die erfindungsgemäße Anlage unter Bezugnahme auf die Figuren näher beschrieben.
- Figur 1: zeigt in einer Prinzipskizze die erfindungsgemäße Vorrichtung in der Seitenansicht.
- Figur 2: stellt in der Seitenansicht ein Beispiel für einen Aufbau der konstruktiven Details dar.
- Figur 3: zeigt den Aufbau der Anlage ohne Feinkiesschicht im Zulauf.
- Figur 4: zeigt die erfindungsgemäße Anlage in der Aufsicht.

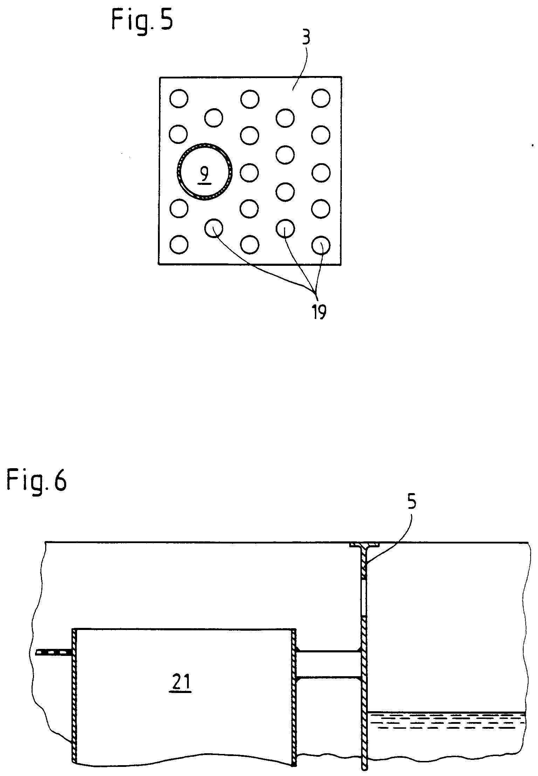

- Figur 5: zeigt den Sedimentationsraum in der Aufsicht.
- Figur 6: zeigt den oberen Teil der Trennwand und des Schwergutablaufschachtes.

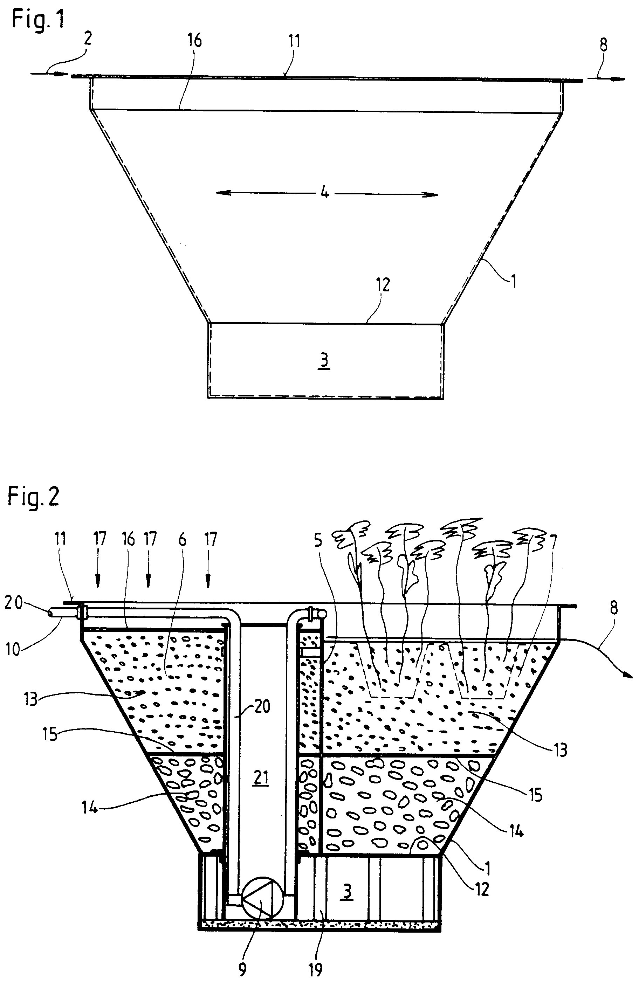

Zur Reinigung wird das Rohwasser über die Zuleitung 2 in die Kammer 6 des Filters eingegeben. In dem erfindungsgemäßen Beispiel gemäß Figur 2 ist diese Filterschicht in ihrem oberen Bereich mit einer feinkörnigen Kiesschicht 13 ausgestattet, während sich in dem unteren Bereich eine grobkörnige Kiesschicht 14 befindet. Beide Schichten sind durch die Filtermatte 15 voneinander getrennt. Die Oberfläche der Kiesschicht 13 ist zudem noch mit dem Filternetz 16 abgedeckt.

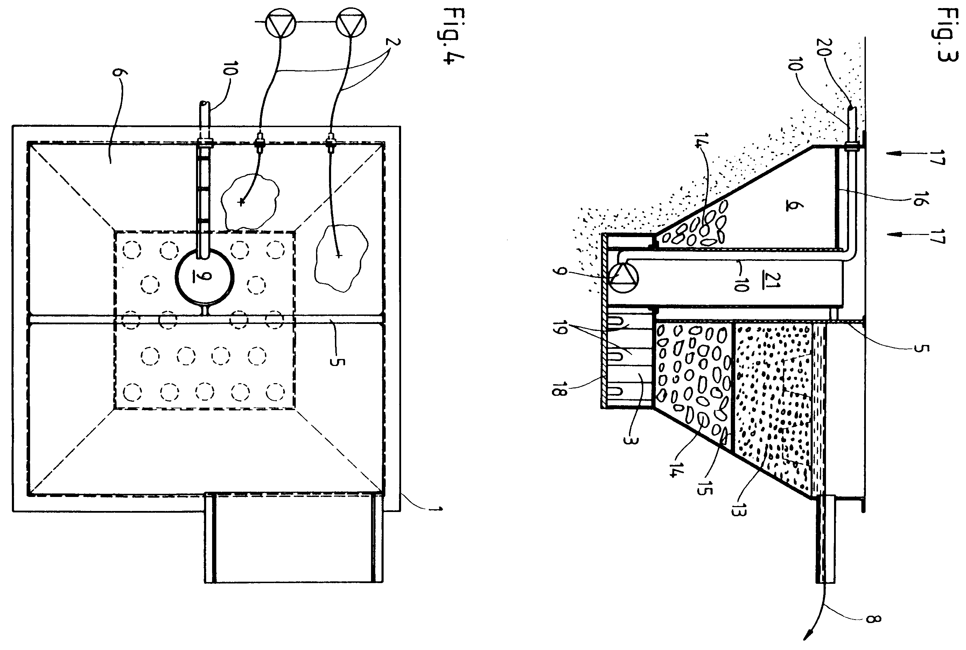

Das über den Zulauf 2 zugegebene Rohwasser sickert durch die Filterschicht 13 und 14 der Kammer 6 in den Sedimentationsraum 3. Im Fall der Figur 3 sickert das Rohwasser entsprechend nur durch die Grobkiesschicht 14. Durch die an dem Kies anhaftenden Mikroorganismen kommt es hierbei zu einer fortwährenden Umsetzung der in dem Rohwasser enthaltenden Schmutzpartikel. In dem Sedimentationsraum 3 setzen sich infolge der Umlenkung der Wasserströmungsrichtung Schlammpartikel auf dessen Boden 18 ab. Der Boden 18 des Sedimentationsraums besteht in dem erfindungsgemäßen Beispiel aus Beton. Auf dieser Betonschicht sind Stützpfeiler 19 angeordnet, auf denen wiederum die Platte 12 gelagert ist. Hierfür können handelsübliche Siebbleche oder Lochplatten ausreichender Stabilität verwendet werden.

Das den Sedimentationsraum durchfließende, aus der Kammer 6 kommende Wasser steigt in der Filtrationskammer 7 wieder nach oben. Hierbei wird es einer weiteren fortlaufenden Reinigung unterworfen. Schließlich fließt über den Ablauf 8 gereinigtes Wasser aus dem Filtrationsgefäß wieder ab.

In dem Sedimentationsraum ist die Schwergutpumpe 9 angeordnet. Mit dieser kann über die in dem Schwergutablaufschacht 21 angeordnete Abfuhrleitung 10 Schlamm aus dem Sedimentationsraum nach außen befördert werden. Der Schlammabfluß 20 ist ebenso wie die Rohzuleitung für das Rohwasser 2 und die Ablaufleitung 8 für das Filtrat an dem oberen Gefäßrand 11 der Filtrationsvorrichtung angebracht, so daß in dem unteren Bereich des Filtrationsgefäßes keinerlei Anschlüsse vorhanden sind. Demgemäß läßt sich die Anlage jederzeit auch im Erdreich versenken.

Zum Spülen der Filtrationsschichten wird über die Leitungen 17 Wasser von oben auf das Filtrationssubstrat unter hohem Druck aufgesprüht. Hierdurch wird der Schlamm in Filtrationsrichtung durch die Kammer 6 in den Sedimentationsraum gedrückt. Mittels der Schwergutpumpe wird von dort der Schlamm direkt nach außen abgeführt. In gleicher Weise läßt sich im Prinzip die von der Kammer 6 durch die Trennwand 5 abgeteilte Kammer 7 reinigen. Denn durch die spezielle Anlage ist die Filterschicht in der Kammer 7 nicht so stark mit Schlamm beaufschlagt, wie Kammer 6. Außerdem weist das aus dem Sedimentationsraum kommende Wasser einen geringeren Schmutz- und Sauerstoffgehalt auf. Der Schmutz- und der Sauerstoffgradient sind daher in der Kammer 7 weniger stark ausgebildet als in der Kammer 6. Demgemäß ergibt sich hier eine weniger strenge Anordnung der Mikroorganismenflora. Aus diesem Grunde können oberhalb der Kammer 7 auch die Spülleitungen 17 angeordnet werden, so daß das Spülwasser im Gegenstrom zur Filtrationsrichtung durch die Filtrationsschicht gedrückt wird.

Aus dem Gesagten dürfte deutlich werden, wo die entscheidenden Unterschiede zum entgegengehaltenen Stand der Technik zu sehen sind. Es ist nämlich erfindungsgemäß essentiell, daß die Filtrationszone durch eine vertikale, oberhalb des Sedimentationsraumes angeordnete Wand in zwei Filterkammern derart geteilt ist, daß diese nur über den Sedimentationsraum miteinander verbunden sind.

Durch diese Anordnung wird erreicht, daß das über den Zulauf 2 in die Kammer 6 gegebene Rohwasser durch die in dieser vorhandenen Filterschicht bis in den Sedimentationsraum 3 sickert. Hierbei findet eine erste Reinigung des Rohwassers statt. In dem Sedimentationsraum 3 setzen sich infolge der Umlenkung der Wasserströmungsrichtung die Schlammpartikel auf dem Boden 18 ab. Anschließend steigt das den Sedimentationsraum durchfließende Wasser wieder in der Kammer 7 auf und wird hierbei einer Nachfilterung unterworfen. Über den Ablauf 8 verläßt gereinigtes Wasser das Filtrationsgefäß.

Mit der in dem Sedimentationsraum angeordneten Schwergutpumpe 9 kann über die Abfuhrleitung 10 Schlamm aus dem Sedimentationsraum nach außen gefördert werden. Die Anlage dieser Pumpe hat den Vorteil, daß sich der während des Filtrationsvorganges ansammelnde Schlamm aus dem Sedimentationsraum entfernen läßt, ohne daß der Filtrationsprozeß unterbrochen werden muß.

Als erfindungsgemäß besonders wirkungsvoll hat sich die beschriebene Reihenfolge der einzelnen Filtrationsabschnitte mit vorgeschalteter Filterschicht, mit nachgeschaltetem Sedimentationsraum sowie mit sich daran anschließender Nachfiltrationsschicht auch deshalb erwiesen, weil die Kammer 7 bei diesem System mit wenig Schlamm beaufschlagt wird und diese aufgrund dessen sehr lange Standzeiten erreicht. Deren Reinigung sowie die evtl. erforderliche Unterbrechung des Filtrationsprozesses ist daher nur in Abständen notwendig, die nach dem bisherigen Stand der Technik nicht erreicht werden konnten.

Als vorteilhaft hat sich bei der erfindungsgemäßen Anlage auch erwiesen, daß eine Reinigung während des Betriebes möglich ist; denn im Gegensatz zum bisherigen Stand der Technik kann die Kammer 6 im Gleichstrom gereinigt werden. Der aus der Filterschicht herausgedrückte Schlamm kann ohne Unterbrechung des Betriebes der Anlage mittels der Schwergutpumpe aus dem Sedimentationsraum entfernt werden. Da eine Reinigung der zweiten Filterkammer 7 - wie oben beschrieben - nur in sehr großen Abständen durchgeführt werden muß, kann demgemäß die Anlage unter Einhaltung sehr langer Standzeiten betrieben werden.

## Patentansprüche

1. Auswaschbarer Filter zur Reinigung von Wasser, bestehend aus einem aufrecht stehenden Gefäß (1) mit einem Zulauf (2) für das Rohwasser in seinem oberen Bereich, unterhalb dessen sich eine aus zwei Filterkammern (6, 7) bestehende Filtrationszone (4) mit einem darunter angeordneten Sedimentationsraum (3) befindet, wobei die erste Kammer (6) unterhalb des Zulaufs (2) angeordnet ist,
**dadurch gekennzeichnet,** daß
a) das Gefäß (1) oben offen ist,
b) die Filtrationszone (4) durch eine vertikale, oberhalb des Sedimentationsraums (3) angeordnete Wand (5) in die zwei Filterkammern (6,7) dergestalt geteilt ist, daß diese nur über den Sedimentationsraum (3) miteinander verbunden sind,
c) der Ablauf (8) für das filtrierte Wasser oberhalb der zweiten Kammer (7) angelegt ist, und
d) in dem Sedimentationsraum (3) eine Schwergutpumpe (9) mit einer Schlammabführleitung (10) sich befindet.
e) die Schlammabfuhrleitung (10) von der Schwergutpumpe (9) zum oberen Rand (11) des Gefäßes (1) und von dort nach außen geführt ist,
f) oberhalb der ersten Kammer (6) eine oder mehrere Leitungen (17) für die Zufuhr des Spülwassers angeordnet ist (sind).

2. Filter nach Anspruch 1,
**dadurch gekennzeichnet**, daß der
Sedimentationsraum (3) von den Filterkammern (6,7) durch eine gelochte Platte (12) getrennt ist.

3. Filter nach einem der Ansprüche 1 oder 2,
**dadurch gekennzeichnet**, daß
in den Filterkammern (6,7) verschiedene Filtersubstrate (13,14) geschichtet sind.

4. Filter nach einem der Ansprüche 1 bis 3,
**dadurch gekennzeichnet**, daß
die Filtersubstrate (13,14) aus Kies bestehen.

5. Filter nach Anspruch 4,
**dadurch gekennzeichnet**, daß
die oberen Bereiche der Filterkammern (6,7) aus feinkörnigem (13) und die unteren Bereiche aus grobkörnigem Kies (14) bestehen.

6. Filter nach einem der Ansprüche 3 bis 5,
**dadurch gekennzeichnet**, daß
die verschiedenen Filtersubstrate durch eine wasserdurchlässige Schicht (15) voneinander getrennt sind.

7. Filter nach Anspruch 6,
**dadurch gekennzeichnet**, daß
die Schicht (15) eine gelochte Platte ist.

8. Filter nach Anspruch 6,
**dadurch gekennzeichnet**, daß die
Schicht (15) eine Filtermatte ist.

9. Filter nach einem der Ansprüche 1 bis 8,
**dadurch gekennzeichnet**, daß
auf der Oberfläche der Filterschichten (13) zusätzlich ein Filternetz (16) angeordnet ist.

## Claims

1. A washable filter for purifying water consisting of an upright vessel (1) having an inlet (2) for the raw water in its upper region, below which a filtration zone (4) which consists of two filter chambers (6,7) is positioned with a sedimentation chamber (3) arranged underneath, the first chamber (6) being disposed below the inlet (2),
**characterized in that**
a) the top of the vessel (1) is open,
b) a vertical wall (5) which is arranged above the sedimentation chamber (3) divides the filtration zone (4) into two filter chambers (6,7) such that the latter are only connected to each other via the sedimentation chamber (3),
c) the outlet (8) for the filtered water is disposed above the second chamber (7),
d) a heavy material pump (9) having a sludge outlet pipe (10) is positioned in the sedimentation chamber (3),
e) the sludge outlet pipe (10) leads from the heavy material pump (9) to the upper edge (11) of the vessel (1) and from there outside, and
f) one or more pipe(s) (17) for the wash water supply is (are) arranged above the first chamber (6).

2. A filter according to claim 1, **characterized in that** the sedimentation chamber (3) is separated from the filter chambers (6,7) by a perforated plate (12).

3. A filter according to any of claims 1 to 2, **characterized in that** different filter substrates (13,14) are disposed in layers in the filter chambers (6,7).

4. A filter according to any of claims 1 to 3, **characterized in that** the filter substrates (13,14) consist of gravel.

5. A filter according to claim 4, **characterized in that** the upper regions of the filter chambers (6,7) consist of fine-grained gravel (13) and the lower regions consist of coarse-grained gravel (14).

6. A filter according to any of claims 3 to 5, **characterized in that** the different filter substrates are separated from each other by a layer (15) which is permeable to water.

7. A filter according to claim 6, **characterized in that** the layer (15) is a perforated plate.

8. A filter according to claim 6, **characterized in that** the layer (15) is a filter mat.

9. A filter according to any of claims 1 to 8, **characterized in that** a filter net (16) is additionally arranged on the surface of the filter layers (13).

## Revendications

1. Filtre lavable destiné à la purification d'eau, se composant d'un récipient debout (1) présentant une amenée (2) pour l'eau brute dans sa zone supérieure, au-dessous de ladite amenée se trouve une zone de filtration (4) se composant de deux chambres de filtration (6, 7) avec un espace de sédimentation (3) disposé là-dessous, la première chambre (6) étant disposée au-dessous de ladite amenée (2),
**caractérisé par le fait que**
a) le récipient (1) est ouvert en haut,
b) la zone de filtration (4) est séparée par le biais d'une paroi (5) verticale disposée au-dessus de l'espace de sédimentation (3) en les deux chambres de filtration (6, 7) de telle sorte que celles-ci ne sont reliées l'une à l'autre que par l'espace de sédimentation (3),
c) la conduite d'écoulement (8) pour l'eau filtrée est disposée au-dessus de la deuxième chambre (7), et
d) que dans l'espace de sédimentation (3) se trouve une pompe pour produits lourds (9) avec une conduite d'évacuation de boues (10).
e) la conduite d'évacuation de boues (10) est menée de la pompe pour produits lourds (9) vers le bord supérieur (11) du récipient (1) et de là vers l'extérieur,
f) une ou plusieurs conduites (17) destinées à l'amenée de l'eau de rinçage est (sont) disposée(s) au-dessus de la première chambre (6).

2. Filtre selon la revendication 1, **caractérisé par le fait** que l'espace de sédimentation (3) est séparé des chambres de filtration (6, 7) par le biais d'une plaque trouée (12).

3. Filtre selon l'une des revendications 1 ou 2, **caractérisé par le fait** que des substrats de filtration (13, 14) différents sont disposés par couches dans les chambres de filtration (6, 7).

4. Filtre selon l'une des revendications 1 à 3, **caractérisé par le fait** que les substrats de filtration (13, 14) se composent de gravier.

5. Filtre selon la revendication 4, **caractérisé par le fait** que les zones supérieures des chambres de filtration (6, 7) se composent de gravier à grains fins (13) et les zones inférieures de gravier à gros grains (14).

6. Filtre selon l'une des revendications 3 à 5, **caractérisé par le fait** que les substrats de filtration différents sont séparés l'un de l'autre par l'intermédiaire d'une couche (15) perméable à l'eau.

7. Filtre selon la revendication 6, **caractérisé par le fait** que ladite couche (15) est une plaque trouée.

8. Filtre selon la revendication 6, **caractérisé par le fait** que ladite couche (15) est une natte de filtration.

9. Filtre selon l'une des revendications 1 à 8, **caractérisé par le fait** que sur la surface des couches de filtration (13) est disposé en sus un filet de filtration (16).
